# EUROPEAN PATENT APPLICATION

(11) **EP 4 745 880 A1**
(43) Date of publication of application: **20.05.2026**
(21) Application number: 25214802.8
(22) Date of filing: 11.11.2025
(51) Int. Cl.: G06T 7/00, G06T 7/62

(54) **METHOD OF DETERMINING DEFORMATION OF BATTERY CELL AND ELECTRONIC DEVICE FOR DETERMINING DEFORMATION OF BATTERY CELL**

(30) Priority: 18.11.2024 KR 20240163751
(71) Applicant: SAMSUNG SDI CO., LTD., Yongin-si, Gyeonggi-do 17084 (KR)
(72) Inventor: Ye, Eunbi, Yongin-si, Gyeonggi-do 17084 (KR); Jeong, Davin, Yongin-si, Gyeonggi-do 17084 (KR); Park, Sung Soo, Yongin-si, Gyeonggi-do 17084 (KR)
(74) Representative: Meissner Bolte Partnerschaft mbB

(57) **Abstract**

A method of determining deformation of a battery includes obtaining a first image (300) by scanning a cross-section of a battery cell in one direction, inputting the first image (300) into an artificial neural network model (231) trained to distinguish a plurality of parts of the battery cell in the first image (300) and obtaining coordinates corresponding to each of the parts, and generating a second image (700) in which at least some of the coordinates are aligned according to a winding sequence related to the battery cell. Deformation of the battery cell is determined based on the second image (700).

## Description

### BACKGROUND

### FIELD

The present invention relates to a method of determining the deformation of a battery cell and an electronic device for determining deformation of a battery cell.

### DESCRIPTION OF THE RELATED ART

Batteries are a core basis for the functional operation of electronic devices. As part of efforts to improve the safety and/or performance of batteries, techniques for determining abnormal conditions of battery cells have been proposed. For example, battery cells can be structurally deformed by various factors such as overcharge, overdischarge, high temperature, low temperature, aging, and/or external impact. Thus, techniques of scanning battery cells with CT (computed tomography) and analyzing the images in order to determine structural deformation of the battery cells have been proposed.

Despite the advantages of CT scans in providing the internal images of battery cells in high-resolution and non-destructive manner, analysis of CT scan images requires more sophisticated technology. For example, determining the structural deformation of battery cells based on CT scan images is limited to simply identifying the deformation with the naked eye, which may lead to reliability issues resulting from subjective judgment. In addition, an analysis method of quantitatively determining the structural deformation of particular regions of a battery cell by using pixel coordinates of a CT scan image has been attempted, but this process may also entail reliability issues in that particular pixels in the CT scan image are selected by user input.

The above information disclosed in this background section is for enhancement of understanding of the background of the present invention, and therefore, it may contain information that does not constitute related (or prior) art.

### SUMMARY OF THE INVENTION

The present invention provides a method of determining the deformation of a battery cell and an electronic device.

These and other aspects and features of the present invention will be described in or will be apparent from the following description of embodiments of the present invention.

A method of determining deformation of a battery cell according to the present invention for solving the technical problem includes obtaining a first image by scanning a cross-section of a battery cell in one direction, inputting the first image into an artificial neural network model trained to distinguish a plurality of parts of the battery cell in the first image, obtaining coordinates corresponding to each of the plurality of parts, generating a second image in which at least some of the coordinates are aligned according to a winding sequence related to the battery cell, and determining deformation of the battery cell based on the second image.

According to one or more embodiments of the present invention, the plurality of parts may include a first part and a second part that are wound around each other, and a third part surrounding the first part and the second part, and the obtaining the coordinates may include identifying first coordinates corresponding to a center point of the third part, and identifying second coordinates corresponding to an extreme point of the first part.

According to one or more embodiments of the present invention, the identifying the first coordinates may include identifying the first coordinates based on third coordinates corresponding to the third part out of the coordinates.

According to one or more embodiments of the present invention, the identifying the second coordinates may include generating a third image by binary-scaling the first image, identifying fourth coordinates corresponding to a plurality of extreme points based on the third image, and determining the second coordinates based on the fourth coordinates.

According to one or more embodiments of the present invention, the determining the second coordinates may include determining coordinates having shortest distance to the first coordinates out of the fourth coordinates as the second coordinates.

According to one or more embodiments of the present invention, the generating the second image may include identifying a distance between each of fifth coordinates corresponding to the first part of the coordinates and the first coordinates, and identifying an angle that each of the fifth coordinates makes with the first coordinates and the second coordinates.

According to one or more embodiments of the present invention, the generating the second image may further include aligning the fifth coordinates according to the identified distances and angles based on the first coordinates and the second coordinates.

According to one or more embodiments of the present invention, the aligning according to the identified distances and angles may include identifying sixth coordinates out of the fifth coordinates that make different angles with the first coordinates and the second coordinates and have shortest distances to the first coordinates, and identifying seventh coordinates out of the fifth coordinates that are not identified as sixth coordinates that make different angles with the first coordinates and the second coordinates and have shortest distances to the first coordinates.

According to one or more embodiments of the present invention, the aligning according to the identified distances and angles may further include connecting the sixth coordinates, identifying a structure in which the sixth coordinates are connected as a first turn of the winding sequence, connecting the seventh coordinates, and identifying a structure in which the seventh coordinates are connected as a second turn of the winding sequence.

According to one or more embodiments of the present invention, the determining the deformation of the battery cell may include determining a circularity of each of the first turn and the second turn, and determining a turn having the circularity below a specified level as a deformed turn.

According to one or more embodiments of the present invention, the method of determining deformation of a battery cell may further include generating training data by labeling the parts in the first image into different classes, and training the artificial neural network model based on the training data.

An electronic device according to the present invention includes a memory configured to store instructions and an artificial neural network model and at least one processor, wherein the instructions, when executed by the at least one processor, cause the electronic device to obtain a first image by scanning a cross-section of a battery cell in one direction, input the first image into the artificial neural network model trained to distinguish a plurality of parts of the battery cell in the first image, obtaining coordinates corresponding to each of the parts, generate a second image in which at least some of the coordinates are aligned according to a winding sequence related to the battery cell, and determine deformation of the battery cell based on the second image.

According to one or more embodiments of the present invention, the plurality of parts may include a first part and a second part that are wound around each other, and a third part surrounding the first part and the second part, and the instructions, when executed by the at least one processor, may cause the electronic device to identify first coordinates corresponding to a center point of the third part, and identify second coordinates corresponding to an extreme point of the first part.

According to one or more embodiments of the present invention, the instructions, when executed by the at least one processor, may cause the electronic device to identify the first coordinates based on a plurality of third coordinates corresponding to the third part out of the plurality of coordinates.

According to one or more embodiments of the present invention, the instructions, when executed by the at least one processor, may cause the electronic device to generate a third image by binary-scaling the first image, identify fourth coordinates corresponding to a plurality of extreme points based on the third image, and determine coordinates having a shortest distance to the first coordinates out of the fourth coordinates as the second coordinates.

According to one or more embodiments of the present invention, the instructions, when executed by the at least one processor, may cause the electronic device to identify a distance between each of fifth coordinates corresponding to the first part of the coordinates and the first coordinates, and identify an angle that each of the fifth coordinates makes with the first coordinates and the second coordinates.

According to one or more embodiments of the present invention, the instructions, when executed by the at least one processor, may cause the electronic device to align the fifth coordinates according to the identified distance and angle based on the first coordinates and the second coordinates.

According to one or more embodiments of the present invention, the instructions, when executed by the at least one processor, may cause the electronic device to identify sixth coordinates out of the fifth coordinate that make different angles with the first coordinates and the second coordinates and have shortest distances to the first coordinates, and identify seventh coordinates out of the fifth coordinates that are not identified as sixth coordinates that make different angles with the first coordinates and the second coordinates and have shortest distances to the first coordinates.

According to one or more embodiments of the present invention, the instructions, when executed by the at least one processor, may cause the electronic device to connect the plurality of sixth coordinates, identify a structure in which the sixth coordinates are connected as a first turn of the winding sequence, connect the seventh coordinates, and identify a structure in which the seventh coordinates are connected as a second turn of the winding sequence.

According to one or more embodiments of the present invention, the instructions, when executed by the at least one processor, may cause the electronic device to determine a turn having the circularity below a specified level as a deformed turn.

According to various embodiments of the present invention, a mechanism can be provided that can obtain coordinates corresponding to each of a plurality of parts of a battery cell by using an artificial neural network model trained based on CT scan images of the battery cell.

According to various embodiments of the present invention, a mechanism can be provided that can align coordinates corresponding to each of a plurality of parts of a battery cell according to a winding sequence related to the battery cell.

According to various embodiments of the present invention, a mechanism can be provided that can reliably determine the deformation of a battery cell based on an image in which coordinates corresponding to each of a plurality of parts of the battery cell are aligned.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 shows an example of a battery according to an embodiment of the present invention;
FIG. 2 shows an example of a cross-section of a battery in one direction according to an embodiment of the present invention;
FIG. 3 shows an example of components of an electronic device according to an embodiment of the present invention;
FIG. 4 shows an example of training of an artificial neural network model according to an embodiment of the present invention;
FIG. 5 shows an example of a first process for aligning coordinates corresponding to a first part of a battery cell according to an embodiment of the present invention;
FIG. 6 shows an example of a second process for aligning coordinates corresponding to a first part of a battery cell according to an embodiment of the present invention;
FIG. 7 shows an example of a third process for aligning coordinates corresponding to a first part of a battery cell according to an embodiment of the present invention;
FIG. 8 shows an example of a process for correcting the alignment of coordinates corresponding to a first part of a battery cell according to one embodiment of the present invention;
FIG. 9 shows an example of determining the deformation of a battery cell according to an embodiment of the present invention; and
FIG. 10 is a flowchart of a method of determining the deformation of a battery cell according to an embodiment of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the related requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

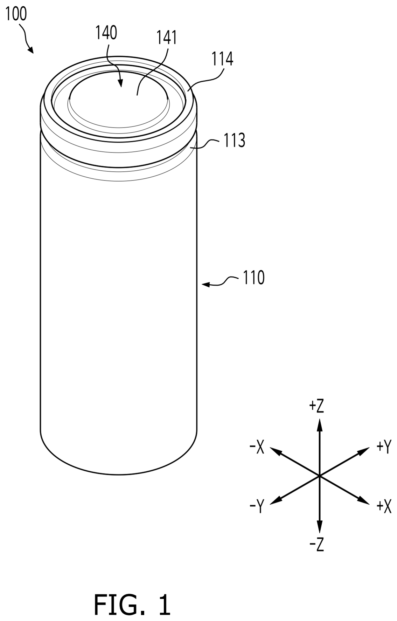

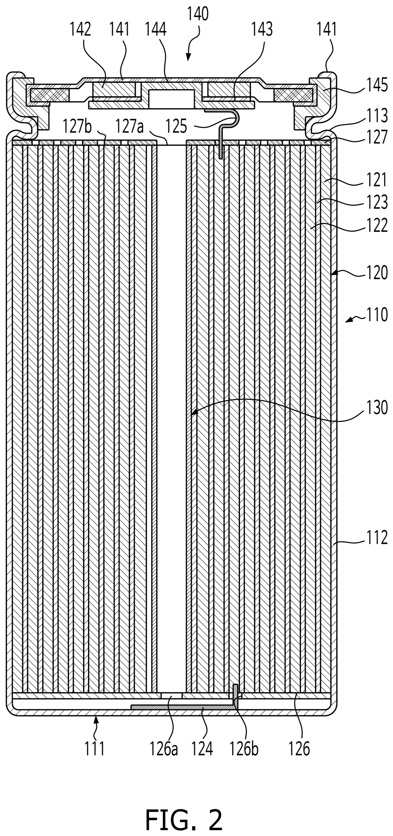

Hereinafter, a battery applicable to various embodiments of the present invention will be described with reference to FIGS. 1 and 2.

FIG. 1 shows an example of a battery according to an embodiment of the present invention. FIG. 2 shows an example of a cross-section of a battery in a direction according to one embodiment of the present invention. In the embodiment of FIG. 2, the cross-section of the battery in one direction may be referred to as a cross-section for the +Y direction and -Y direction or a cross-section for the +X direction and -X direction shown in FIG. 1.

As shown in FIGS. 1 and 2, a cylindrical lithium ion secondary battery 100 according to one or more embodiments of the present invention may include a cylindrical can 110, an electrode assembly 120, and a cap assembly 140. In addition, in some embodiments, the cylindrical lithium ion secondary battery 100 may include a center pin 130. In addition, in the secondary battery 100 according to one or more embodiments of the present invention, the cap assembly 140 may also perform a current interruption operation and, thus, may sometimes be referred to as a current interrupt device (CID).

The cylindrical can 110 may have a substantially circular bottom part 111 and a cylindrical sidewall 112 upwardly extending (e.g., extending a predetermined length) from a circumference (or a periphery) of the bottom part 111. During the manufacturing process of the secondary battery 100, the top portion of the cylindrical can 110 is open. Therefore, during the assembly process of the secondary battery 100, the electrode assembly 120 and the center pin 130 may be inserted into the cylindrical can 110 together with an electrolyte. The cylindrical can 110 may be made of, for example, steel, stainless steel, aluminum, aluminum alloy, or an equivalent thereof but is not limited to.

In addition, to prevent the cap assembly 140 from escaping to the outside (e.g., being separated from the cylindrical can 110), with respect to the cap assembly 140, the cylindrical can 110 may include a beading part (e.g., a bead) 113 recessed toward the inside at the bottom of the cap assembly 140 and a crimping part (e.g., a crimp) 114 bent inwardly at the top thereof.

The electrode assembly 120 may be accommodated inside the cylindrical can 110. The electrode assembly 120 may include a negative electrode plate 121 coated with a negative electrode active material (e.g., graphite, carbon, etc.) on a negative electrode current collector plate, a positive electrode plate 122 coated with a positive electrode active material (e.g., a transition metal oxide, such as LiCoO2, LiNiO2, LiMn2O4, etc.) on a positive electrode current collector plate, and a separator 123 positioned between the negative electrode plate 121 and the positive electrode plate 122 to prevent a short circuit therebetween while allowing the movement of lithium ions therethrough. In addition, the negative electrode plate 121, the positive electrode plate 122, and the separator 123 may be wound in a substantially cylindrical shape. In one embodiment, the negative electrode current collector may be made of copper (Cu) foil, the positive electrode current collector may be made of aluminum (Al) foil, and the separator may be made of polyethylene (PE) or polypropylene (PP), but the present invention is not limited thereto.

In addition, a negative electrode tab 124 protruding and extending a certain length (e.g., a suitable length) downwardly from the electrode assembly 120 may be welded to the negative electrode plate 121, and a positive electrode tab 125 protruding and extending a certain length (e.g., a suitable length) upwardly from the electrode assembly 120 may be welded to the positive electrode plate 122, but an opposite configuration is possible. In addition, for example, the negative electrode tab 124 may be made of copper (Cu) or nickel (Ni), and the positive electrode tab 125 may be made of aluminum (Al), but the present invention is not limited thereto.

In addition, the negative electrode tab 124 of the electrode assembly 120 may be welded to the bottom part 111 of the cylindrical can 110. Therefore, the cylindrical can 110 may act as a negative electrode. Of course, alternatively, the positive electrode tab 125 may be welded to the bottom part 111 of the cylindrical can 110, and in such an embodiment, the cylindrical can 110 may act as a positive electrode.

In addition, the secondary battery 100 may include a first insulation plate 126 coupled to the cylindrical can 110, may have a first hole 126a in the center and one or more second holes 126b outside (e.g., peripheral to the center) thereof, and may be interposed between the electrode assembly 120 and the bottom part 111. The first insulation plate 126 prevents the electrode assembly 120 from electrically contacting the bottom part 111 of the cylindrical can 110. By way of example, the first insulation plate 126 prevents the positive electrode plate 122 of the electrode assembly 120 from electrically contacting the bottom part 111. The first hole 126a allows the gas to quickly move upwardly through the center pin 130 if (or when) a large amount of gas is generated due to an abnormality of the secondary battery 100, and the one or more second holes 126b allow the negative electrode tab 124 to penetrate (or extend) therethrough and be welded to the bottom part 111.

In addition, the secondary battery 100 may include a second insulation plate 127 coupled to the cylindrical can 110, having a first hole 127a in the center and a plurality of second holes 127b formed outside thereof (e.g. located peripherally to the center), and may be interposed between the electrode assembly 120 and the cap assembly 140. The second insulation plate 127 prevents the electrode assembly 120 from electrically contacting the cap assembly 140. By way of example, the second insulation plate 127 prevents the negative electrode plate 121 of the electrode assembly 120 from electrically contacting the cap assembly 140. The first hole 127a allows the gas to quickly move toward the cap assembly 140 if (or when) a large amount of gas is generated due to an abnormality of the secondary battery, and the second holes 127b allow the positive electrode tab 125 to penetrate (or extend) therethrough and be welded to the cap assembly 140. In addition, the remaining second holes 127b allow an electrolyte to quickly flow into the electrode assembly 120 in an electrolyte injection process.

In addition, the diameters of the first holes 126a and 127a of the first and second insulation plates 126 and 127 are formed to be smaller than the diameter of the center pin 130, thereby preventing the center pin 130 from electrically contacting the bottom part 111 of the cylindrical can 110 or the cap assembly 140 due to an external impact.

The center pin 130 has a shape of a hollow circular pipe and may be coupled to the center of the electrode assembly 120. The center pin 130 may be made of, for example, steel, stainless steel, aluminum, an aluminum alloy, or polybutylene terephthalate, but the present invention is not limited thereto. The center pin 130 suppresses (or prevents) deformation of the electrode assembly 120 during charging and discharging of the battery and acts as a passage for gas generated inside the secondary battery. Of course, in some embodiments, the center pin 130 may be omitted.

The cap assembly 140 may include a top plate 141, a middle plate 142, an insulation plate 143, and a bottom plate 144.

The middle plate 142 is located below the top plate 141 and may have a substantially flat shape.

When viewed from the bottom, the insulation plate 143 may be formed in a circular ring shape having a suitable width (e.g., a predetermined width). In addition, the insulation plate 143 insulates the middle plate 142 and the bottom plate 144 from each other. The insulation plate 143 may be interposed between, for example, the middle plate 142 and the bottom plate 144 to then be ultrasonically welded, but the present invention is not limited thereto.

The cylindrical lithium-ion battery applicable to various embodiments of the present invention has been described above, but the present invention is not limited to the specifics of the cylindrical lithium-ion battery described above. For example, embodiments of the present invention are applicable to batteries that include an electrode assembly formed by winding a positive electrode plate, a negative electrode plate, and a separator, and a can that houses the corresponding electrode assembly. That is, embodiments of the present invention can be applied various types or shapes of batteries.

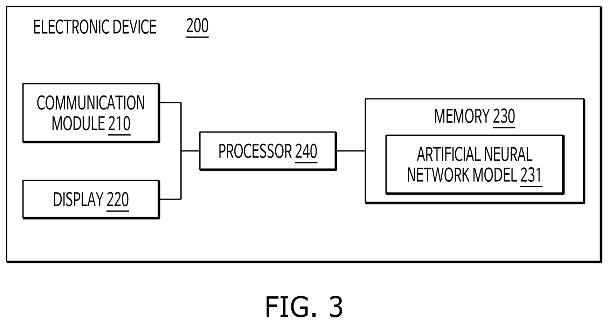

FIG. 3 is a diagram showing an example of components of an electronic device according to an embodiment of the present invention. Referring to FIG. 3, an electronic device 200 according to an embodiment may include a communication module 210, a display 220, a memory 230, and at least one processor 240. According to various embodiments, the electronic device 200 may not include at least some of these components or may further include other additional components. For example, the electronic device 200 may further include a scanner that supports CT scanning of a battery cell that includes an electrode assembly (e.g., the electrode assembly 120 of FIG. 2) and a can (e.g., the cylindrical can 110 of FIG. 2).

The communication module 210 may provide a function that allows for the electronic device 200 to communicate with at least one external electronic device via a short-range communication network (e.g., Bluetooth, WiFi direct, or IrDA (infrared data association)) or a long-range communication network (e.g., a cellular network, the Internet, or a computer network). For example, the communication module 210 may establish communication (or a communication channel) in accordance with a defined communication protocol with at least one external electronic device via a network and may perform transmission and reception of signals and/or data (or, datasets or data packets) to and from the at least one external electronic device via the corresponding communication.

At least a part of the display 220 may be exposed to outside of the electronic device 200, and the display 220 may visually output various contents (e.g., images related to battery cells) supported by the systems and/or applications of the electronic device 200. In this regard, the display 220 may include a display drive direct circuit that receives and processes a drive signal corresponding to image information from the at least one processor 240. Further, the display 220 may include a touch panel (or a touch sensing circuit) and may detect various types of user inputs based on such a touch panel and output corresponding electrical signals or digital values.

The memory 230 may include any non-transitory computer-readable recording medium. For example, the memory 230 may include a permanent mass storage device, such as a read-only memory (ROM), a disk drive, a solid-state drive (SSD), or a flash memory. Further, the memory 230 may store an operating system and at least one program code, e.g., program code for generating images used to determine the deformation of battery cells based on scanned images of the corresponding battery cells. The memory 230 also may store instructions that, when executed by the at least one processor 240, cause components of the electronic device 200 to perform defined functional operations.

According to one embodiment, the memory 230 may store an artificial neural network model 231 that includes a plurality of neural network layers. Each of the plurality of neural network layers of the artificial neural network model 231 may have a weight and may generate output data through an activation function after applying the weight to input data. In various embodiments, the artificial neural network model 231 may include, but is not limited to, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks, and may include any form of artificial neural network model.

The at least one processor 240 may be configured to process instructions of a computer program by performing basic arithmetic, logic, and input/output operations. The instructions may be provided from the memory 230. For example, the at least one processor 240 may be configured to execute the received instructions according to the program code stored in the memory 230. In various embodiments, the at least one processor 240 may include at least one of a general-purpose processor (e.g., a central processing unit, an application processor, a digital signal processor, or a microprocessor), a dedicated graphics processor (e.g., a graphics processing unit or a vision processing unit), or a dedicated artificial intelligence processor (e.g., a neural processing unit). In embodiments where the at least one processor 240 includes a dedicated artificial intelligence processor, the processor may be designed as a hardware structure specialized for learning, controlling, or processing related to the artificial neural network model 231.

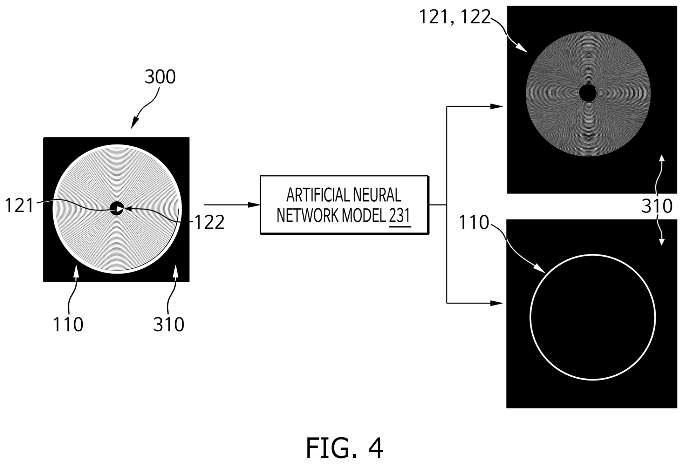

FIG. 4 is a diagram showing an example of training of an artificial neural network model according to an embodiment of the present invention. Referring to FIG. 4, an electronic device (e.g., the electronic device 200 of FIG. 3) may train the artificial neural network model 231. For example, the electronic device 200 may train the artificial neural network model 231 with input data based on a learning algorithm such as supervised learning, unsupervised learning, semi-supervised learning, and/or reinforcement learning, and output a desired characteristic (or result).

According to an embodiment, the electronic device 200 may obtain a first image 300 by scanning (e.g., computed tomography scan (CT)) a cross-section of a battery cell, which includes an electrode assembly in a can, in one direction in connection with training the artificial neural network model 231. The electronic device 200 may obtain the first image 300 by loading image data stored in a memory (e.g., the memory 230 of FIG. 3) or may obtain the first image 300 by receiving image data from an external electronic device based on a communication module (e.g., the communication module 210 of FIG. 3).

The electronic device 200 may generate training data to train the artificial neural network model 231 based on the first image 300. According to an embodiment, the electronic device 200 may generate training data (hereinafter referred to as a fourth image) obtained by labeling a plurality of parts of the battery cell in the first image 300 into different classes based on user input and/or a separate artificial neural network model. For example, the electronic device 200 may generate the fourth image by labeling, as different classes, a first part 121 of the battery cell corresponding to a wound positive electrode plate in the first image 300, a second part 122 of the battery cell corresponding to a negative electrode plate wound together with the positive electrode plate, a third part 110 of the battery cell corresponding to a can that houses (or encloses) the wound assembly (e.g., an electrode assembly) of the positive and negative electrode plates, and a fourth part 310 corresponding to an outer region of the can. The electronic device 200 may generate a plurality of fourth images corresponding to a plurality of different first images 300 and train the artificial neural network model 231.

The artificial neural network model 231 trained based on at least one fourth image may receive the first image 300 as input and identify and distinguish the plurality parts of the battery cell, e.g., the first part 121, the second part 122, the third part 110, and the fourth part 310. The artificial neural network model 231 may provide, as output data, a plurality of pixel coordinates corresponding to a point and/or points included in each of the plurality of parts of the battery cell.

According to various embodiments, the training of the artificial neural network model 231, e.g., training the artificial neural network model 231 to distinguish a plurality of parts of the battery cell in a received image and to output a plurality of coordinates corresponding to those parts, may be performed in at least one external electronic device that is communicatively connected to the electronic device 200. In this arrangement, the electronic device 200 may obtain data related to the trained artificial neural network model 231 from the corresponding external electronic device and store it in the memory 230.

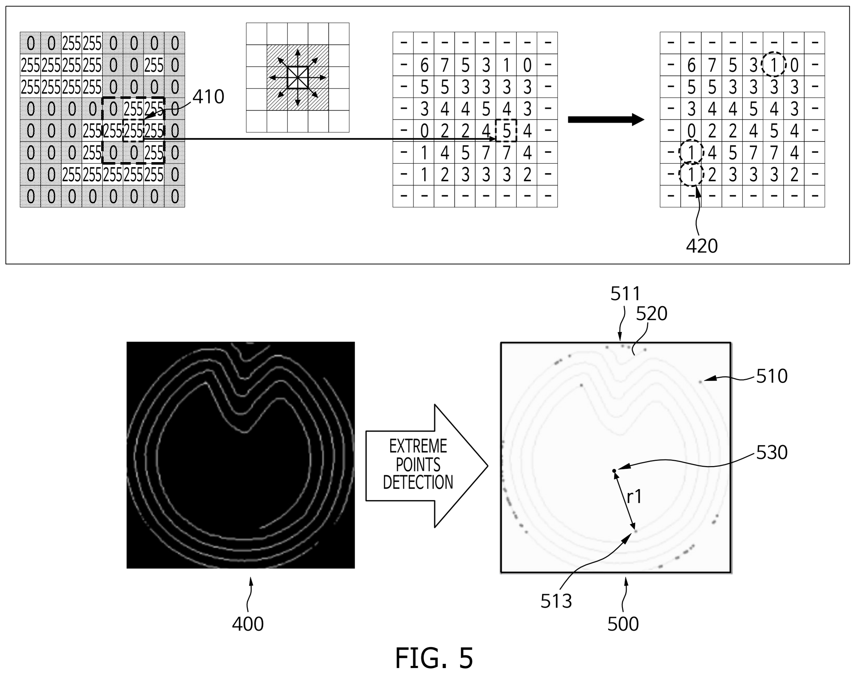

FIG. 5 shows an example of a first process for aligning coordinates corresponding to a first part of a battery cell according to an embodiment of the present invention. Referring to FIG. 5, an electronic device (e.g., the electronic device 200 of FIG. 3) may perform a series of processes for aligning at least some of a plurality of coordinates corresponding to each of a plurality of parts of a battery cell obtained from an artificial neural network model (e.g., the artificial neural network model 231 of FIG. 3). For example, the coordinates output from the artificial neural network model 231 may be provided in a non-aligned manner independent of the actual locations of those coordinates on a first image (e.g., the first image 300 of FIG. 4). The electronic device 200 may perform operations on the coordinates to align the coordinates of a first part of the battery cell (e.g., the first part 121 of FIG. 4) corresponding to the positive electrode plate according to the winding sequence of the positive electrode plate of the battery cell. Similarly, the electronic device 200 may perform operations on the coordinates in order to align the coordinates of a second part of the battery cell (e.g., the second part 122 of FIG. 4) corresponding to the negative electrode plate according to the winding sequence of the negative electrode plate of the battery cell.

Various embodiments of aligning the plurality of coordinates corresponding to the first part 121 of the battery cell will be illustrated in the following invention. However, the present invention is not limited to the alignment of the coordinates corresponding to the first part 121 of the battery cell, and the following description may also be applied equally or similarly to the alignment of coordinates corresponding to the second part 122 of the battery cell and/or the alignment of coordinates corresponding to a third part 110 of the battery cell.

The electronic device 200 may identify the coordinates of an extreme point corresponding to the leading edge of the first part 121 out of the coordinates corresponding to the first part 121 of the battery cell. In this regard, the electronic device 200 may generate (or obtain) a third image 400 by performing binary scaling on the first image 300 and identify extreme points included in the first part 121 of the battery cell based on the third image 400. For example, the electronic device 200 may identify connectivity between a particular pixel and neighboring pixels in the third image 400. More particularly, the electronic device 200 may identify at least one second pixel having a pixel value other than 0 (e.g., 1 or 255) in 8-way directions from a first pixel 410 based on the first pixel 410 on the third image 400. The electronic device 200 may generate a two-dimensional integer matrix by assigning a value corresponding to the number of at least one second pixel to the first pixel 410 and thus assign a value to each of a plurality of pixels corresponding to the first part 121 of the battery cell included in the third image 400.

In an embodiment, the electronic device 200 may identify a plurality of pixels 420 having a value of 1 in the generated two-dimensional integer matrix and determine points corresponding to the plurality of pixels as a plurality of extreme points included in the first part 121 of the battery cell. The electronic device 200 may place the plurality of extreme points in a fourth image 500 obtained by labeling the first image 300 in order to determine an extreme point corresponding to the leading edge of the first part 121 of the battery cell out of the plurality of extreme points. The electronic device 200 may determine coordinates corresponding to each of a plurality of extreme points 510 in the fourth image 500 as a candidate group of the coordinates of the extreme point corresponding to the leading edge of the first part 121 of the battery cell.

The fourth image 500 may include regions that are divided (or disconnected) into different regions even though they are of the same class according to the labeling processing results. In this case, the electronic device 200 may exclude extreme points 511 that are placed in a particular region 520 in less than a specified number (e.g., 10) out of the plurality of extreme points placed in the fourth image 500 from the candidate group in determining the coordinates of the extreme point corresponding to the leading edge of the battery cell.

In order to determine the coordinates of the extreme point of the first part 121 of the battery cell out of the coordinates corresponding to each of the plurality of extreme points 510 placed in the fourth image 500, the electronic device 200 may identify the distance between each of the coordinates and coordinates corresponding to the center point of the third part 110 of the battery cell. For example, the electronic device 200 may identify the center point 530 of the third part 110 based on coordinates corresponding to the third part 110 of the battery cell obtained from the artificial neural network model 231, and identify distances between the coordinates of the center point 530 and the coordinates corresponding to each of the plurality of extreme points 510. According to an embodiment, the electronic device 200 may determine an extreme point 513 having the shortest distance r1 to the coordinates corresponding to the center point 530 of the third part 110 out of the coordinates corresponding to each of the plurality of extreme points 510 as the extreme point that corresponds to the leading edge of the first part 121 of the battery cell.

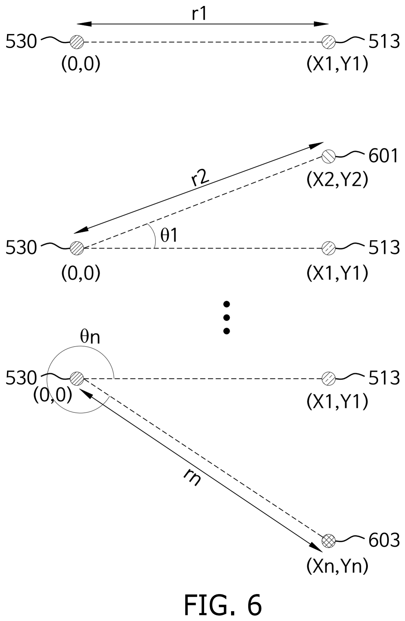

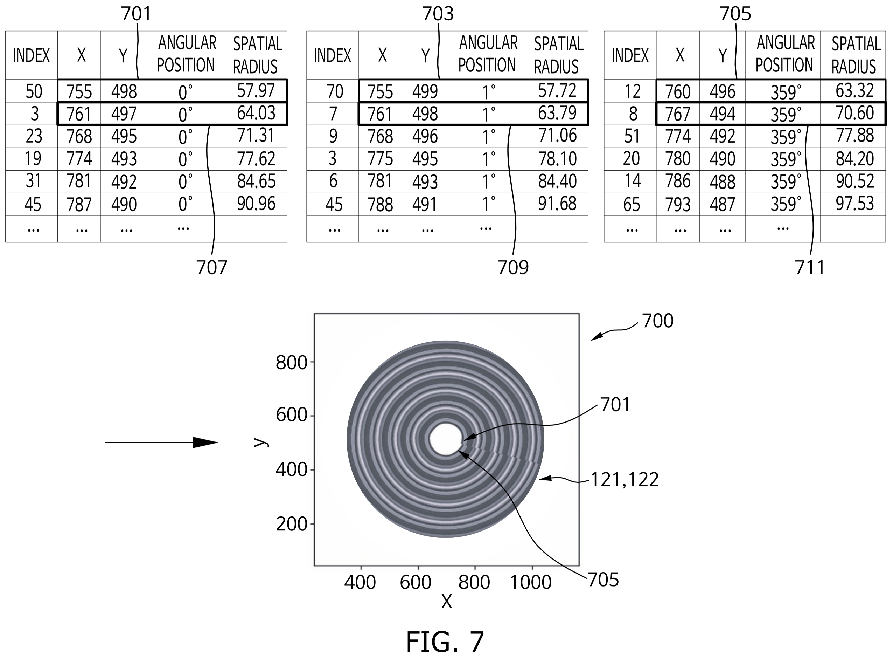

FIG. 6 shows an example of a second process for aligning coordinates corresponding to a first part of a battery cell according to an embodiment of the present invention. FIG. 7 shows an example of a third process for aligning coordinates corresponding to a first part of a battery cell according to an embodiment of the present invention. Referring to FIG. 6, in order to align a plurality of coordinates corresponding to a first part (e.g., the first part 121 of FIG. 3) of a battery cell obtained from an artificial neural network model (e.g., the artificial neural network model 231 of FIG. 3), an electronic device (e.g., the electronic device 200 of FIG. 3) may identify a distance and an angle of each of the plurality of coordinates. For example, the electronic device 200 may identify the distance between each of the coordinates and the coordinates of the center point of a third part (e.g., the third part 110 of FIG. 4) of the battery cell. As an example, the electronic device 200 may identify a distance r2 between first coordinates 601 included in the plurality of coordinates and the coordinates of the center point 530 of the third part 110 and may identify a distance rn between second coordinates 603 included in the plurality of coordinates and the coordinates of the center point 530 of the third part 110. Further, the electronic device 200 may identify the angle that the remaining coordinates, except for the coordinates of the extreme point 513 of the first part 121, of the plurality of coordinates make with the coordinates of the center point 530 of the third part 110 and the coordinates of the extreme point 513 of the first part 121 based on the coordinates of the center point 530 of the third part 110 and the coordinates of the extreme point 513 of the first part 121 of the battery cell. As a particular example, the electronic device 200 may identify an angle θ1 that the first coordinates 601 make with the coordinates of the center point 530 of the third part 110 and the coordinates of the extreme point 513 of the first part 121, and may identify an angle θn (where n is a natural number) that the second coordinates 603 make with the coordinates of the center point 530 of the third part 110 and the coordinates of the extreme point 513 of the first part 121.

Referring to FIGS. 6 and 7, the electronic device 200 according to an embodiment may group the plurality of coordinates corresponding to the first part 121 of the battery cell based on the identified angles. As one example, the electronic device 200 may group coordinates that form an angle of 0 degrees with the coordinates of the center point 530 of the third part 110 and/or the coordinates of the extreme point 513 of the first part 121 of the battery cell, and group coordinates that form an angle of 1 degree with the coordinates of the center point 530 of the third part 110 and the coordinates of the extreme point 513 of the first part 121 of the battery cell into another group. The electronic device may list the grouped coordinates in ascending order according to the distance identified for the coordinates.

The electronic device 200 may generate a second image 700 in which points corresponding to each of the grouped coordinates and listed in ascending order are aligned. In this regard, the electronic device 200 may place (or input) the center point 530 of the third part 110 and the extreme point 513 of the first part 121 of the battery cell in the second image 700, and the electronic device 200 may place the remaining points according to the distance to the center point 530 and the angle formed with the center point 530 and the extreme point 513 based on the center point 530 and the extreme point 513. Further, the electronic device 200 may identify points corresponding to a plurality of coordinates that forms different angles with the center point 530 of the third part 110 and the extreme point 513 of the first part 121 and that have the shortest distance to the center point 530 of the third part 110 in the group of angles. As one example, the electronic device 200 may identify a point corresponding to coordinates 701 having the shortest distance to the center point 530 of the third part 110 out of the coordinates that form 0 degrees with the center point 530 of the third part 110 and the extreme point 513 of the first part 121. And, in a similar manner, the electronic device 200 may identify a point of the coordinates having the shortest distance to the center point 530 of the third part 110 for each angle group.

The electronic device 200 may connect points of coordinates having the shortest distance to the center point 530 of the third part 110 identified in each angle group in the second image 700. For example, the electronic device 200 may connect points corresponding to the coordinates 701, 703, and 705 having the shortest distance to the center point 530 of the third part 110 of the battery cell in each of a 0-degree angle group, and a 1-degree angle group to a 359-degree angle group. The electronic device 200 may identify a structure formed by the connected points as a first turn for a winding sequence of the battery cell (e.g., a winding sequence of the electrode assembly included in the battery cell). Similarly, the electronic device 200 may identify coordinates 707, 709, and 711 having the next shortest distance to the center point 530 of the third part 110 of the battery cell in sequence in each of the 0-degree angle group, and the 1-degree angle group to the 359-degree angle group, and the electronic device 200 may identify a second turn for the winding sequence of the battery cell by connecting the points corresponding to the coordinates in the second image 700.

An example in which angle groups are divided based on 1-degree units has been described in the embodiment of FIG. 7, but the present invention is not limited thereto. For example, in other embodiments, angle groups may be divided based on any angle units.

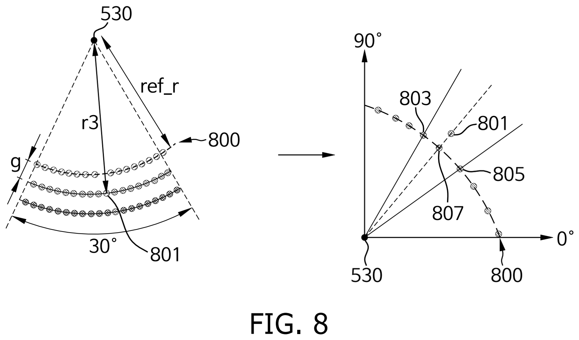

FIG. 8 is a diagram showing an example of a process for correcting the alignment of coordinates corresponding to a first part of a battery cell according to an embodiment of the present invention. Referring to FIG. 8, an electronic device 200 according may determine an alignment error for points aligned in a second image (e.g., the second image 700 of FIG. 7).

In particular, the electronic device 200 may identify a deviation in the distances between each of a plurality of points constituting corresponding turns and the center point of a third part (e.g., the third part 110 of FIG. 4) of the battery cell for each of the identified turns of the battery cell in order to determine the alignment error of the points. In this regard, the electronic device 200 may identify a plurality of second points adjacent to a first point of the points constituting a particular turn of the battery cell within a specified angular range (e.g., 30 degrees) based on the first point, and the electronic device 200 may identify an average distance that the second points form with the center point of the third part 110 of the battery cell. Further, the electronic device 200 may identify an average of gaps (or distances) that each of the turns of the battery cell forms with adjacent turns.

The electronic device 200 may determine the alignment error of the first point based on the identified average distance of the second points to the first point and the average gap for the turns of the battery cell. As one example, the electronic device 200 may determine that the first point 801 includes an alignment error if the difference between the distance r3 between the first point 801 and the center point 530 of the third part 110 and the average distance ref-r between the second points and the center point 530 of the third part 110 is greater than or equal to a specified multiple (e.g., about 0.8 times) of the average gap g.

The electronic device 200 may correct the alignment of at least one point for which an alignment error has been determined. As an example, the electronic device 200 may identify a plurality of third points 803 and 805 adjacent to the first point 801 at different angles in a turn 800 including the first point 801 based on the first point 801 for which the alignment error has been determined. The electronic device 200 may correct the placement (or input) of the first point 801 to a point 807 on the second image 700 corresponding to an average distance between each of the plurality of third points 803 and 805 and the center point 530 of the third part 110. Further, the electronic device 200 may correct the coordinates of the first point 801 based on the distance to the center point 530 of the third part 110 corrected for the first point 801. For example, the electronic device 200 may correct the coordinates of the first point 801 by using the corrected distance of the first point 801, the angle of the first point 801, and a trigonometric function.

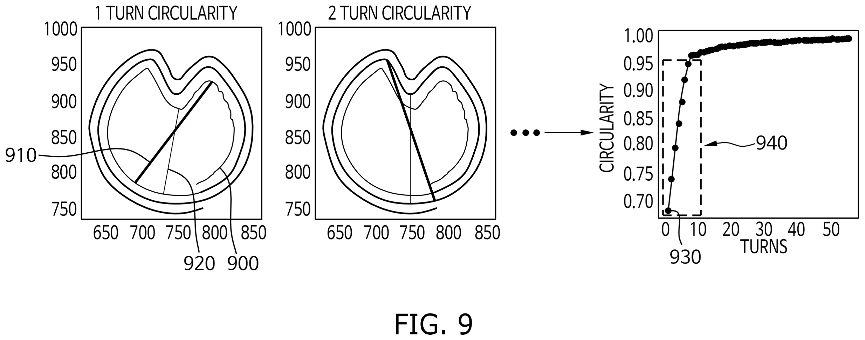

FIG. 9 shows an example of determining the deformation of a battery cell according to an embodiment of the present invention. Referring to FIG. 9, an electronic device (e.g., the electronic device 200 of FIG. 3) may determine the deformation of the battery cell based on a second image in which a plurality of points (or a plurality of coordinates corresponding to the plurality of points) corresponding to a first part (e.g., the first part 121 of FIG. 4) of the battery cell is aligned. In this regard, the electronic device 200 may identify points constituting a first turn of a winding sequence of the battery cell in the second image, and the electronic device 200 may identify a maximum diameter and a minimum diameter of the first turn defined by the points. The electronic device 200 may identify a maximum diameter 910 and a minimum diameter 920 that connect from a first point of the points constituting a first turn 900 of the battery cell to a second point through the center point of a third part (e.g., the third part 110 of FIG. 4).

The electronic device 200 may determine a circularity for each of the turns of the battery cell. For example, the electronic device 200 may determine a circularity 930 of the first turn 900 by using the maximum diameter 910 and minimum diameter 920 identified for the first turn 900. In an embodiment, the electronic device 200 may determine the degree of deformation and/or the deformed portion of the battery cell based on the circularity determined for each of the turns of the battery cell. For example, the electronic device 200 may determine turns having a circularity 940 below a specified level (e.g., about 94%) as deformed turns, and identify deformed portions on the turn based on the points (or coordinates corresponding to the points) used to calculate the maximum diameter and minimum diameter in the turn.

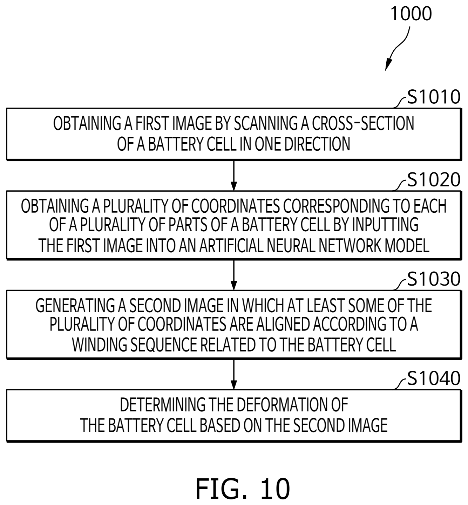

FIG. 10 is a flowchart of a method of determining the deformation of a battery cell according to embodiments of the present invention. Hereinafter, the steps of a method 1000 may be performed in sequence or out of sequence. For example, the order of the steps depicted in FIG. 10 may be changed, or at least two steps may be performed in parallel.

Referring to FIG. 10, in step S1010, an electronic device (e.g., the electronic device 200 of FIG. 3) according to an embodiment may obtain a first image by scanning (e.g., CT scan (computed tomography scan)) a cross-section of a battery cell (e.g., a battery cell consisting of an electrode assembly and a can) in one direction. For example, the electronic device 200 may obtain the first image by loading image data stored in a memory (e.g., the memory 230 of FIG. 3), or may obtain the first image by receiving image data from an external electronic device based on a communication module (e.g., the communication module 210 of FIG. 3).

In step S1020, the electronic device 200 may obtain coordinates corresponding to each of a plurality of parts of a battery cell by inputting the first image into an artificial neural network model (e.g., the artificial neural network model 231 of FIG. 3). For example, the electronic device 200 may obtain coordinates corresponding to each of a first part of the battery cell corresponding to a wound positive electrode plate, a second part of the battery cell corresponding to a negative electrode plate wound together with the positive electrode plate, a third part of the battery cell corresponding to a can that houses (or encloses) a winding assembly of the positive and negative electrode plates, and a fourth part corresponding to an outer region of the can, from the artificial neural network model 231 trained based on at least one first image.

In step S1030, the electronic device 200 may generate a second image in which at least some of the coordinates obtained from the artificial neural network model 231 are aligned according to a winding sequence related to the battery cell. In this regard, the electronic device 200 may identify the center point of the third part of the battery cell based on a plurality of coordinates corresponding to the third part and identify an extreme point corresponding to the leading edge of the first part (or the second part) of the battery cell based on coordinates corresponding to the first part (or the second part). Further, the electronic device 200 may identify distances between points represented by each of the coordinates corresponding to the first part (or the second part) of the battery cell and the center point of the third part based on the identified center point and extreme point, and the electronic device 200 may identify angles that each of the points makes with the center point of the third part and the extreme point of the first part (or the second part).

The electronic device 200 may place (or input) the center point of the third part and the extreme point of the first part (or the second part) in the second image, and the electronic device 200 may place points corresponding to each of the plurality of coordinates of the first part (or the second part) according to the identified distances and angles. The electronic device 200 may connect at least some of the points placed in the second image in order to identify turns related to a winding sequence of the battery cell. For example, the electronic device 200 may connect a plurality of points having different angles and having the shortest distance to the center point of the third part of the battery cell, and the electronic device 200 may identify a connection structure of the points as a first turn for the winding sequence of the battery cell. Similarly, the electronic device 200 may identify a second turn for the winding sequence of the battery cell by connecting a plurality of points having different angles and having the next shortest distance to the center point of the third part of the battery cell in sequence.

In step S1040, the electronic device 200 may determine the deformation of the battery cell based on the second image. For example, the electronic device 200 may determine a circularity using the maximum diameter and minimum diameter of a turn for each of the turns of the battery cell, and the electronic device 200 may determine at least one turn having a circularity below a specified level as a deformed turn.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention.

## Claims

1. A method of determining deformation of a battery cell, executed by at least one processor (240), the method comprising:
obtaining a first image (300) by scanning a cross-section of a battery cell in one direction;
inputting the first image (300) into an artificial neural network model (231) trained to distinguish a plurality of parts of the battery cell in the first image (300);
obtaining coordinates corresponding to each of the parts;
generating a second image (700) in which at least some of the coordinates are aligned according to a winding sequence related to the battery cell; and
determining deformation of the battery cell based on the second image (700).

2. The method according to claim 1, wherein the plurality of parts comprises a first part (121) and a second part (122) that are wound around each other, and a third part (110) surrounding the first part (121) and the second part (122), and
wherein obtaining the coordinates comprises:
identifying first coordinates (601) corresponding to a center point (530) of the third part (110); and
identifying second coordinates (603) corresponding to an extreme point (513) of the first part (121).

3. The method according to claim 2, wherein the identifying the first coordinates (601) comprises identifying the first coordinates (601) based on a plurality of third coordinates corresponding to the third part (110) out of the coordinates.

4. The method according to claim 2 or 3, wherein identifying the second coordinates (603) comprises:
generating a third image (400) by binary-scaling the first image (300);
identifying fourth coordinates corresponding to a plurality of extreme points (510) based on the third image (400); and
determining coordinates having shortest distances to the first coordinates (601) out of the fourth coordinates as the second coordinates (603).

5. The method according to claim 2, 3 or 4, wherein generating the second image (700) comprises:
identifying a distance between each of fifth coordinates corresponding to the first part (121) of the coordinates and the first coordinates (601);
identifying an angle that each of the fifth coordinates makes with the first coordinates (601) and the second coordinates (603); and
aligning the fifth coordinates according to the identified distances and angles based on the first coordinates (601) and the second coordinates (603).

6. The method according to claim 5, wherein aligning according to the identified distances and angles comprises:
identifying sixth coordinates out of the fifth coordinates that make different angles with the first coordinates (601) and the second coordinates (603) and have shortest distances to the first coordinates (601); and
identifying seventh coordinates out of the fifth coordinates that are not identified as sixth coordinates that make different angles with the first coordinates (601) and the second coordinates (603) and have shortest distances to the first coordinates (601).

7. The method according to claim 6, wherein aligning according to the identified distances and angles further comprises:
connecting the sixth coordinates;
identifying a structure in which the sixth coordinates are connected as a first turn of the winding sequence;
connecting the seventh coordinates; and
identifying a structure in which the seventh coordinates are connected as a second turn of the winding sequence.

8. The method according to claim 7, wherein determining the deformation of the battery cell comprises:
determining a circularity of each of the first turn and the second turn; and
determining a turn having the circularity below a specified level as a deformed turn.

9. An electronic device (200) comprising:
a memory configured to store instructions and an artificial neural network model (231); and
at least one processor (240),
wherein the instructions, when executed by the at least one processor (240), cause the electronic device (200) to:
obtain a first image (300) by scanning a cross-section of a battery cell in one direction,
input the first image (300) into the artificial neural network model trained to distinguish a plurality of parts of the battery cell in the first image (300),
obtain coordinates corresponding to each of the parts,
generate a second image (700) in which at least some of the coordinates are aligned according to a winding sequence related to the battery cell, and
determine deformation of the battery cell based on the second image (700).

10. The electronic device (200) according to claim 9, wherein the plurality of parts comprises a first part (121) and a second part (122) that are wound around each other, and a third part (110) surrounding the first part (121) and the second part (122), and
wherein the instructions, when executed by the at least one processor (240), cause the electronic device (200) to:
identify first coordinates (601) corresponding to a center point (530) of the third part (110), and
identify second coordinates (603) corresponding to an extreme point (513) of the first part (121).

11. The electronic device (200) according to claim 9 or 10, wherein the instructions, when executed by the at least one processor (240), cause the electronic device (200) to:
identify the first coordinates (601) based on a plurality of third coordinates corresponding to the third part (110) out of the plurality of coordinates,
generate a third image (400) by binary-scaling the first image (300),
identify fourth coordinates corresponding to a plurality of extreme points (510) based on the third image (400), and
determine coordinates having a shortest distance to the first coordinates (601) out of the fourth coordinates as the second coordinates (603).

12. The electronic device (200) according to any of claims 9 to 11, wherein the instructions, when executed by the at least one processor (240), cause the electronic device (200) to:
identify a distance between each of fifth coordinates corresponding to the first part (121) of the coordinates and the first coordinates (601),
identify an angle that each of the fifth coordinates makes with the first coordinates (601) and the second coordinates (603),
align the fifth coordinates according to the identified distance and angle based on the first coordinates (601) and the second coordinates (603).

13. The electronic device (200) according to any of claims 10 to 12, wherein the instructions, when executed by the at least one processor (240), cause the electronic device (200) to:
identify sixth coordinates out of the fifth coordinates that make different angles with the first coordinates (601) and the second coordinates (603) and have shortest distances to the first coordinates (601), and
identify seventh coordinates out of the fifth coordinates that are not identified as sixth coordinates that make different angles with the first coordinates (601) and the second coordinates (603) and have shortest distances to the first coordinates (601).

14. The electronic device (200) according to any of claims 10 to 13, wherein the instructions, when executed by the at least one processor (240), cause the electronic device (200) to:
connect the sixth coordinates,
identify a structure in which the sixth coordinates are connected as a first turn of the winding sequence,
connect the seventh coordinates, and
identify a structure in which the seventh coordinates are connected as a second turn of the winding sequence.

15. The electronic device (200) according to any of claims 10 to 14, wherein the instructions, when executed by the at least one processor (240), cause the electronic device (200) to:
determine a circularity of each of the first turn and the second turn, and
determine a turn having a circularity below a specified level as a deformed turn.
